# EUROPÄISCHE PATENTSCHRIFT

(11) **EP 2 883 853 B1**
(45) Veröffentlichungstag und Bekanntmachung des Hinweises auf die Patenterteilung: **15.03.2017**
(21) Anmeldenummer: 14189763.7
(22) Anmeldetag: 21.10.2014
(51) Int. Cl.: C04B 35/043, C04B 35/101, C04B 35/12, C04B 35/18, C04B 35/20, C04B 35/44, C04B 35/48

(54) **Grobkeramisches feuerfestes Erzeugnis und Verfahren zu seiner Herstellung sowie seine Verwendung**
Coarse ceramic fire resistant product and method for its manufacture and its use
Produit de céramique refractaire, son procédé de fabrication ainsi que son utilisation

(30) Priorität: 10.12.2013 DE 102013020732
(43) Veröffentlichungstag der Anmeldung: 17.06.2015
(60) Teilanmeldung: 16200700.9
(73) Patentinhaber: Refratechnik Holding GmbH, 85737 Ismaning (DE)
(72) Erfinder: Klischat, Hans-Jürgen, Dr., 37083 Göttingen (DE); Vellmer, Carsten, Dr., 37073 Göttingen (DE); Wirsing, Holger, 37081 Göttingen (DE)
(74) Vertreter: Patent- und Rechtsanwälte Dr. Solf & Zapf

(56) Entgegenhaltungen:
- EP-A1- 1 260 289
- EP-A2- 1 852 405
- WO-A1-2008/025441
- DE-A1- 2 044 885
- DE-A1- 2 200 002
- GB-A- 755 514
- GB-A- 1 327 749
- JP-A- H1 160 340
- JP-A- 2013 001 584

## Beschreibung

Die Erfindung betrifft ein grobkeramisches, feuerfestes Erzeugnis aus mindestens einem feuerfesten Werkstoff. Die Erfindung betrifft außerdem die Herstellung des Erzeugnisses und seine Verwendung.

Erfindungsgemäße grobkeramische, feuerfeste Erzeugnisse sind keramisch gebrannte oder ungebrannte geformte, insbesondere gepresste, in einer keramischen Fabrik hergestellte oder beim Verwender erstellte monolithische Produkte, die in industriellen Brenn- oder Schmelz- oder in anderen befeuerten industriellen Aggregaten, z. B. in einem großvolumigen Industrieofen zur feuerfesten Auskleidung derselben verwendet werden.

Der Begriff "feuerfest" soll im Rahmen der Erfindung nicht begrenzt sein auf die Definition gemäß ISO 836 bzw. DIN 51060, die einen Kegelfallpunkt von > 1500° C definieren. Der Begriff soll sich vielmehr auf Erzeugnisse beziehen, die zum Schutz der Aggregatkonstruktionen in Aggregaten eingesetzt werden, in denen Temperaturen zwischen 600 und 2000 °C, insbesondere zwischen 1000 und 1800° C vorherrschen.

Von den feuerfesten Werkstoffen ist dem Fachmann bekannt, dass sie auf sechs feuerfesten Grundoxiden sowie Kohlenstoff und feuerfesten Kohlenstoffverbindungen basieren, die z. B. in "Gerald Routschka/Hartmut Wuthnow, Praxishandbuch "Feuerfeste Werkstoffe", 5. Auflage, Vulkan-Verlag, (im Folgenden lediglich mit "Praxishandbuch" bezeichnet), S. 1-7", benannt und klassifiziert sind. Zudem werden dort hauptsächliche Verwendungen der aus den feuerfesten Werkstoffen hergestellten Erzeugnisse angegeben.

Die Erfindung befasst sich mit der an sich bekannten grobkeramischen Herstellung der feuerfesten Erzeugnisse entsprechend Praxishandbuch, S. 15-20. Insbesondere sollen erfindungsgemäße geformte und insbesondere gepresste feuerfeste Erzeugnisse eine dem Anwendungszweck angepasste Kaltdruckfestigkeit, die insbesondere auch für deren Handhabbarkeit bei und nach ihrer Herstellung und auch noch nach Temperaturwechseln ausreichend hoch sein soll. Des Weiteren sollen sie Temperaturbeständigkeit bei Anwendungstemperaturen, Korrosionsbeständigkeit, Thermoschockbeständigkeit, gute Gefügeelastizität, angepasstes Druckerweichen, niedrige Gasdurchlässigkeit und hohe Heißbiegefestigkeit gewährleisten.

Darüber hinaus sollen erfindungsgemäße Erzeugnisse als Arbeitsfutter, d. h. als feuerseitige bzw. aggregatinnenseitige Auskleidung, geeignet sein und dabei den jeweiligen Anforderungen entsprechen, zudem aber auch eine geringere Wärmeleitfähigkeit im Vergleich jeweils mit den bisher dafür verwendeten Erzeugnissen aufweisen.

Aus der DE 10 2006 040 269 B4 sind grobkeramische, feuerfeste Erzeugnisse aus jeweils unterschiedlichen feuerfesten Werkstoffen bekannt, die möglicherweise als Arbeitsfutter verwendbar sind und aufgrund einer hohen offenen Porosität wohl auch eine relativ geringe Wärmeleitfähigkeit aufweisen. Diese bekannten Erzeugnisse wie auch die meisten anderen auf dem Markt befindlichen, bekannten feuerfesten Arbeitsfuttererzeugnisse mit geringerer Porosität haben die Eigenschaft, bei Temperaturerhöhung volumenmäßig zu wachsen und bei anschließender Temperaturerniedrigung i. d. R. reversibel zu schwinden, was regelmäßig nach ihrer Herstellung und vor ihrer Verwendung z. B. nach DIN-EN 993-19 geprüft wird. Diese Eigenschaft wird auch mit dem Begriff "reversible Wärmedehnung" bezeichnet. Diesem Verhalten wirkt man durch die Anbringung von entsprechenden, sogenannten Dehnfugen in einem feuerfesten Mauerwerk oder in einer feuerfesten monolithischen Auskleidung entgegen. (Monolithisch bedeutet im Rahmen der Erfindung, dass eine Auskleidung aus einer formlosen, verarbeitbaren Frischmasse, z. B. einer Feuerbetonfrischmasse, vor Ort erstellt worden ist.)

Die meisten bekannten grobkeramischen feuerfesten Erzeugnisse ändern aber in situ, d. h. im Einsatz im befeuerten Aggregat bei Temperaturschwankungen, ihr Volumen nicht nur reversibel, sondern auch irreversibel, indem ein sogenanntes irreversibles Nachschwinden stattfindet. Dieses Nachschwinden beruht z. B. auf unvollständiger Sinterung, Phasenumwandlungen oder chemischer Reaktionen in einem geformten oder ungeformten Erzeugnis.

Durch das Nachschwinden, aus dem eine bisher unvermeidbare irreversible Volumenänderung resultiert, werden die Fugen zwischen den feuerfesten Erzeugnissen einer Auskleidung eines Aggregats geöffnet. Dies führt zur Lockerung und Instabilität eines Arbeitsfuttermauerwerks oder einer feuerfesten, monolithischen Arbeitsfutterzustellung bzw. Auskleidung. Das Nachschwinden von feuerfesten Erzeugnissen wird nach DIN-EN 993-10 geprüft, indem irreversible Längenänderungen ermittelt werden.

Aus der EP 1 260 289 A1 ist ein poröses feuerfestes Erzeugnis aus einem Magnesia-Alumina-Spinell Werkstoff bekannt, aufweisend eine Porosität von 15 - 22 Vol.-% und ein Kornband von 0 bis 0,5 mm mit 30 bis 37 Gew.-%.

Aufgabe der Erfindung ist, das Nachschwinden von grobkeramischen, für ein Arbeitsfutter geeigneten, zum Nachschwinden neigenden, feuerfesten Erzeugnissen zumindest deutlich zu mindern, und zwar ohne intolerierbaren Einfluss auf ihre jeweils auf die Anwendung abgestellten Eigenschaften, wie z. B. die vorgegebene Kaltdruckfestigkeit (mechanisch), in situ die vorgegebene Festigkeit während der thermischen und mechanischen Beaufschlagung (thermomechanisch), als auch in situ die Widerstandsfähigkeit gegen chemischen Angriff (thermochemisch). Dabei soll insbesondere zudem eine geringere Wärmeleitfähigkeit gewährleistet werden im Vergleich zu bisher üblicherweise verwendeten, relativ hohe Wärmeleitfähigkeit aufweisenden Arbeitsfutterauskleidungen.

Bisher wurde die Verringerung der Wärmeleitfähigkeit von feuerfesten Zustellungen meist durch mehrschichtige Futteranordnungen aus Arbeits- und Isolierschichten verwirklicht. Besonders in bewegten Aggregaten wie z. B. Zementdrehrohröfen sind Mehrschichtfutter mechanisch sehr empfindlich bzw. bruchanfällig. Außerdem ist der Einbau aufwändig. Um die durch sogenannte Zwischenschichtfutter gegebenen Unsicherheiten im Betrieb zu vermeiden, ist der Einbau von Arbeitsfutter ohne Isolierschicht nicht unüblich. Damit verbunden sind aber höhere, das Material eines Aggregatmantels belastende Temperaturen und höhere Wärmeverluste.

Es ist deshalb auch ein Ziel der vorliegenden Erfindung, grobkeramische, insbesondere durch Pressen geformte feuerfeste Erzeugnisse mit verringerter Wärmeleitfähigkeit durch höhere Porosität zu schaffen, die, wie oben angegeben, als Arbeitsfutter mechanisch, thermomechanisch und thermochemisch geeignet sind und dabei zumindest vergleichbare erforderliche Eigenschaften gewährleisten wie grobkeramische feuerfeste Erzeugnisse mit niedrigerer Porosität, wobei gleichzeitig auch das Nachschwinden zumindest gemindert sein soll.

Die erfindungsgemäße Aufgabe wird durch die Merkmale der Ansprüche 1, 9 und 18 gelöst. Vorteilhafte Ausführungsformen der Erfindung werden in den von diesen Ansprüchen abhängigen Ansprüchen gekennzeichnet.

Die Erfindung stellt zwar höher poröse, aber bezüglich Brennschwindung und Nachschwindung trotzdem volumenstabilere, als Arbeitsfutter geeignete, feuerfeste Erzeugnisse zur Verfügung, als sie nach dem Stand der Technik für Arbeitsfutter bekannt waren. Die erfindungsgemäßen feuerfesten Erzeugnisse weisen im Vergleich zum Stand der Technik, z. B. nach DE 10 2006 040 269 B4 deutlich verringerte Grobkornanteile von > 0.5 mm auf, wobei aber der Mittelkornanteil der Körnung 0,1 bis 0,5 mm erhöht ist und der unter 0,1 mm liegende sogenannte Mehlkornanteil vorzugsweise auch erhöht ist. Im Rahmen der Erfindung soll unter "Grobkorn" Kornbereiche > 0.5 und bis z. B. 8, insbesondere bis z. B. 6 mm und unter "Mittelkorn" Kornbereiche zwischen 0.1 und 0.5 mm verstanden werden, wobei der Anteil < 0.1 mm der Mehl- oder Feinkornanteil ist. Mit dem Kornaufbau hängt außer den genannten neuartigen verbesserten Eigenschaften bezüglich Brennschwinden, Nachschwinden und Porosität auch zusammen ein verbessertes Verarbeitungsverhalten daraus hergestellter pressbarer bzw. formbarer, mindestens ein Bindemittel und/oder mindestens ein Zusatzmittel und/oder einen Zusatzstoff und/oder Wasser enthaltender Massen, aus denen die ungebrannten und/oder gebrannten erfindungsgemäßen feuerfesten Erzeugnisse hergestellt werden.

Nach der Erfindung zeichnet sich somit ein erfindungsgemäßes geformtes grobkeramisches, insbesondere gepresstes, feuerfestes Erzeugnis, unabhängig von der werkstoffseitigen Zusammensetzung aus durch eine offene Porosität von 23 Vol.-% bis 45 Vol.-%, insbesondere von 23 bis 29 Vol.-%, und einen z. B. durch entsprechende Siebung erstellten Kornaufbau des feuerfesten Werkstoffs oder, bei mehreren gemischt verwendeten feuerfesten Werkstoffen, des Werkstoffgemisches, der mit normaler Kornverteilung des Werkstoffs oder, bei mehreren verwendeten feuerfesten Werkstoffen, des Werkstoffgemisches nach einer Siebung mit entsprechenden Sieben sich wie folgt auszeichnet:

| | |
|---|---|
| bis 0,1 mm: | 20 - 61, insbesondere 25 bis 55 Gew.-% |
| 0,1 - 0,5 mm: | 30 - 55, insbesondere 35 bis 50 Gew.-% |
| über 0,5 mm bis z.B. 8 mm, | |
| insbesondere bis 6 mm: | 9 - 25, insbesondere 10 bis 25 Gew.-% |

In keramischen feuerfesten Erzeugnissen sind die aufgefundenen Grenzwerte eines Kornaufbaus meist optimale Grenzwerte, die - wie der Fachmann weiß - bei einigen feuerfesten Werkstoffen oder Werkstoffgemischen ± 10 % nach unten und/oder oben mit gleichwirkenden und gleichwertigen Ergebnissen bezüglich einer erfindungsgemäßen Lösung einer erfindungsgemäßen Aufgabe abweichen können.

Die angegebenen Gew.-% (im Folgenden auch Masse-% genannt) beziehen sich lediglich auf den Kornaufbau des feuerfesten Werkstoffs oder des feuerfesten Werkstoffgemisches und nicht auf weitere Körnungen von üblichen zusätzlich in untergeordneten Mengen zugesetzten Bestandteilen eines erfindungsgemäßen feuerfesten Erzeugnisses, wie Bindemittel und/oder chemische Zusatzmittel oder mineralische Zusatzstoffe, wie z. B. Antioxidantien, die insgesamt in Mengen von maximal 10 Gew.-% vorhanden sein können.

Die erfindungsgemäßen geformten grobkeramischen, insbesondere gepressten feuerfesten Erzeugnisse sind trotz hoher Porosität als Arbeitsfutter in einem befeuerten Industrieofenaggregat als Austausch gegen übliche bisher verwendete, sogenannte dichte gepresste feuerfeste Erzeugnisse verwendbar, weil sie die erforderlichen mechanischen, thermomechanischen und thermochemischen Arbeitsfuttereigenschaften aufweisen.

Dies ist überraschend, denn es ist allgemein bekannt, dass die meisten üblichen geformten und gepressten grobkeramischen feuerfesten Erzeugnisse, mit denen sich die Erfindung befasst, nur offene Porositäten bis etwa 21 Vol.-% aufweisen, wenn die erwünschten, für die Anwendung eingestellten Eigenschaften gewährleistet werden sollen (Bezüglich Porosität siehe Praxishandbuch, S. 127, Tafel 4.43, für Porosität von Magnesiaspinell-, Spinell-, Magnesiazirko-nia- und Magnesiazirkonsteinen). Man bezeichnet diese üblichen geformten grobkeramischen, gepressten feuerfesten Erzeugnisse deshalb auch als dichte feuerfeste Erzeugnisse im Vergleich zu feuerfesten wärmedämmenden Erzeugnissen höherer Porosität, die als Wärmedämm- oder Feuerleichtsteine bezeichnet werden und höhere Gesamtporositäten von mindestens 45 Vol.-% aufweisen (Praxishandbuch, S. 211-214). Bekanntlich hat die Porosität einen erheblichen Einfluss auf die mechanischen, thermomechanischen und thermochemischen Eigenschaften der geformten grobkeramischen feuerfesten Erzeugnisse. Mit steigender Porosität verändern sich die Eigenschaften typischerweise drastisch (Praxishandbuch, S. 307, Bild A17).

Es ist überraschend, dass dies bei erfindungsgemäßen geformten, grobkeramischen feuerfesten Erzeugnissen nicht bzw. nicht in diesem drastischen Ausmaß der Fall ist, wie anhand von den weiter unten beschriebenen Beispielen noch nachgewiesen werden wird.

Der erfindungsgemäße Kornaufbau, der die Einstellung von hoher offener Porosität bei den erfindungsgemäßen geformten, grobkeramischen feuerfesten Erzeugnissen aus einem feuerfesten Versatz durch Pressen bei der Formgebung ermöglicht, gewährleistet in überraschender Weise auch eine Reduzierung der sogenannten Brennschwindung, die in der Regel unvermeidbar beim keramischen Brennen eines geformten grünen feuerfesten Erzeugnisses oder unter keramischen Brennbedingungen bei einem erfindungsgemäßen geformten grünen feuerfesten Erzeugnisses oder bei einem ungeformten erfindungsgemäßen grünen monolithischen Erzeugnis auftritt, bei denen eine Temperaturbeaufschlagung bzw. das keramische Brennen erst in situ in einem Industrieofenaggregat feuerseitig stattfindet. Diese Brennschwindung ist nicht die bei Temperaturschwankungen auftretende reversible Volumenänderung oder das irreversible Nachschwinden.

Übliche feuerfeste Arbeitsfuttererzeugnisse haben in der Regel einen typischen stetigen Korngrößenaufbau, der zwischen 20 und 40 Gew.-% der Korngrößenfraktion 0,1 bis 1 mm aufweist (Praxishandbuch, S. 16, Tabelle 2.1), wobei die erfindungsgemäß relevante Korngrößenfraktion von 0,1 bis 0,5 mm beim Stand der Technik unterhalb der Grenze von 30 Gew.-% liegt, denn der Anteil zwischen 0,5 und 1 mm beträgt mehr als 10 Gew.-%.

Für die Herstellung erfindungsgemäßer geformter, insbesondere gepresster feuerfester Erzeugnisse werden Mischungen in im Rahmen der Erfindung aufgefundenen Kornaufbaubereichen aus mindestens einem feuerfesten Werkstoff zusammengestellt und vorzugsweise mit mindestens einem für die Herstellung für feuerfeste Erzeugnisse geeigneten Bindemittel und/oder mindestens einem üblichen Zusatzmittel und/oder mindestens einem üblichen Zusatzstoff und/oder Wasser gemischt. Die Masse wird in Formen gegeben und gepresst, so dass Formkörper gebildet werden. Die Pressdrücke werden erfindungsgemäß so gewählt, dass eine Porosität erzielt wird, die im gebrauchsfertigen ungebrannten oder gebrauchsfertigen gebrannten Erzeugnis mindestens 23 Vol.-% beträgt, vorzugsweise über 23 Vol.-% liegt und bis 45 Vol.-% beträgt. Es hat sich herausgestellt, dass Pressdrücke von 10 bis 60, insbesondere von 10 bis 40 MPa, also relativ niedrige Pressdrücke, optimal sind im Vergleich zu üblicherweise verwendeten Pressdrücken von 60 bis 150 MPa. Offenbar sorgt die Kornverteilung der Werkstoffmischungen im Mittelkorngrößenbereich zwischen 0,1 und 0,5 mm, dessen Kornverteilung zweckmäßigerweise in diesem Bereich z. B. stetig eingestellt sein kann oder z. B. eine Gaußsche Kornverteilung aufweisen kann, in Kombination mit den angegebenen Mengenanteilen dieses Korngrößenbereichs in der gesamten Kornaufbaumischung dafür, dass sich insbesondere beim Pressen das erfindungsgemäße Porenvolumen bilden kann und dass die Körner dieses Korngrößenbereichs ein Stützgerüst im Gefüge des erfindungsgemäßen geformten grobkeramischen Erzeugnisses gewährleisten, das durch eine gegenseitige Abstützung der Körner eine Verringerung der Brennschwindung und/oder des Nachschwindens sorgt oder zumindest zu einer beachtlichen Verringerung des Nachschwindens beiträgt.

Für die erfindungsgemäßen feuerfesten Erzeugnisse werden z. B. feuerfeste Werkstoffe wie Magnesia, Doloma, Magnesiumaluminat-Spinell, Hercynit, Forsterit, Pleonast, Chromerz, Zirconia, Calciumaluminat, Calciumhexaaluminat, Alumina- und alumosilicatische Rohstoffe SiC, Bindeton, jeweils allein oder auch in zweckmäßiger Kombination mindestens zweier Werkstoffe verwendet. Besonders wirksam gelingt die Erfindung mit feuerfesten Werkstoffen auf der Basis von mindestens einem der folgenden Werkstoffe: Magnesia, Doloma, Schamotte, Andalusit, Forsterit, Bauxit. Ganz besonders wirksam gelingt die Erfindung mit mindestens einem der folgenden Werkstoffe auf Basis
Magnesia mit Magnesiumaluminat-Spinell
Magnesia mit Herzynit
Magnesia mit Forsterit
Magnesia mit Pleonast
Magnesia mit Chromerz.

Geformte grobkeramische feuerfeste Erzeugnisse werden meist unter Verwendung von geeigneten Bindemitteln hergestellt. Beispiele dafür, mit üblichen Zusatzmengen angegeben, enthält die Tabelle 3.2 auf S. 28, 29 im Praxishandbuch. Es hat sich im Rahmen der Erfindung gezeigt, dass erfindungsgemäß angestrebte Gefüge sich insbesondere dann und insbesondere bei den bevorzugt verwendeten Werkstoffen einstellen, wenn als Bindemittel Wasser und/oder mindestens ein für feuerfeste Erzeugnisse üblicherweise verwendetes, insbesondere wärmehärtendes Kunstharzbindemittel, wie ein Phenol-Formaldehydharz, oder Ligninsulfonat, in Mengen von 3 bis 9, insbesondere von 4 bis 6 Gew.-%, bezogen auf die Trockensubstanz der zu pressenden Werkstoffausgangsmischung für geformte gepresste Erzeugnisse verwendet wird, woraus sich eine verbesserte Pressbarkeit für die Herstellung der erfindungsgemäß angestrebten Gefüge mit den angestrebten Porenvolumina und dem abstützenden aus der Korngrößenfraktion 0,1 bis 0,5 resultierenden, insbesondere das Nachschwinden vermeidenden bzw. stark reduzierenden Stützkorngerüst ergibt. Für monolithische erfindungsgemäße Erzeugnisse werden diese Bindemittel gleichermaßen mit günstiger Wirkung verwendet.

Ein besonders geeignetes Verfahren zur Herstellung erfindungsgemäßer grobkeramischer, als Arbeitsfutter geeigneter feuerfester Erzeugnisse mit stark vermindertem Nachschwinden, geringerer Wärmeleitfähigkeit und höherer Porosität im Vergleich zu herkömmlichen dichten Arbeitsfuttererzeugnissen sieht vor, mindestens einen gekörnten Werkstoff zu verwenden mit folgendem Kornaufbau:

| | |
|---|---|
| bis 0,1 mm: | 20 - 61, insbesondere 25 bis 55 Gew.-% |
| 0,1 - 0,5 mm: | 30 - 55, insbesondere 35 bis 50 Gew.-% |
| über 0,5 mm bis z.B. 6 mm | |
| oder bis 8 mm: | 9 - 25, insbesondere 10 bis 25 Gew.-% |

Der Begriff "Korn" oder "Körner" oder "gekörnt" oder "Körnung" oder "Kornaufbau" bedeutet im Rahmen der vorliegenden Erfindung, dass das Produkt wie üblich aus einer Zerkleinerung, z. B. durch Mahlen oder Brechen grobkörnigen Guts erzeugt wird und eine unregelmäßige splittrige Raumform der Körner aufweist im Gegensatz zu Granalien, die durch Agglomeration aus Körnern mindestens eines feuerfesten Werkstoffs in einem Granulieraggregat gebildet werden und dadurch gerundete, z. B. kugelförmige Raumformen aufweisen.

Wenn mehrere Werkstoffe unterschiedlichen Kornaufbaus verwendet werden, werden sie z. B. 2 bis 4 Minuten lang trocken gemischt, wobei danach das Gemisch obigem erfindungsgemäßen Kornaufbau entspricht.

Im Rahmen der Erfindung werden Werkstoffe oder Werkstoffgemische verwendet, die auch zur Herstellung üblicher dichter feuerfester Arbeitsfuttererzeugnisse zum gleichen Zweck verwendbar wären.

Dem Werkstoff oder Werkstoffgemisch wird mindestens ein Bindemittel zugesetzt, z. B. Wasser und/oder Teer und/oder Pech und/oder vorzugsweise mindestens ein für feuerfeste Erzeugnisse üblicherweise verwendetes Kunstharzbindemittel, z. B. ein Phenolformaldehyd oder Furan- oder Novolakharz, und/oder Ligninsulfonat, jeweils in Mengen von z. B. 3 bis 9, insbesondere von 4 bis 6 Gew.-% bezogen auf die Trockensubstanz der zu pressenden Werkstoffausgangsmischung für geformte gepresste Erzeugnisse. Danach wird zur optimalen Verteilung des oder der Bindemittel z. B. 3 bis 10 Minuten lang gemischt. Die Bindemittelmenge und die Mischart bzw. der Mischer werden vorzugsweise so gewählt, dass ein sogenanntes Mischergranulat entsteht aus Granalien mit Granaliendurchmessern z. B. zwischen 0.1 und 5 mm, insbesondere zwischen 0.5 und 4 mm. Es ist zweckmäßig, während der Granulation weiteres Wasser und/oder Bindemittel der Mischung zuzugeben, z. B. zuzudüsen.

Vorzugsweise wird anschließend an diese Mischergranulation oder unter Auslassung der Mischergranulation und lediglich nach einem einfachen Durchmischen mit in den Mischer gegebenen zu granulierenden Materialien eine sogenannte Aufbaugranulation z. B. in einem Granuliermischer oder einer Granuliertrommel oder auf einem Granulierteller z. B. 3 bis 6 Minuten lang durchgeführt, wobei Aufbaugranalien mit Granaliendurchmessern zwischen 2 und 15 mm, insbesondere zwischen 3 und 6 mm, erzeugt werden.

Die Granalien aus der Mischergranulation oder der Aufbaugranulation werden in eine Pressform einer Presse gegeben und mit Pressdrücken zwischen 10 und 60, insbesondere zwischen 20 und 40 MPa, zu Formkörpern so gepresst, dass grüne Formkörper mit Rohdichten zwischen 1.80 und 2.80, insbesondere zwischen 2.00 und 2.70 g/cm³, erzeugt werden mit Druckfestigkeiten zwischen 1.5 und 7, insbesondere zwischen 2 und 4 MPa. Vorzugsweise wird eine Trocknung durchgeführt zwischen 60 und 200, insbesondere zwischen 90 und 140 °C, bis auf eine Restfeuchte zwischen 0.1 und 0.6, insbesondere zwischen 0.2 und 0.5 Gew.-%, wonach sich die angegebenen Druckfestigkeiten auch erst nach der Trocknung einstellen können. Diese grünen, insbesondere getrockneten Grünsteine können ohne weiteres gehandhabt, z. B. gestapelt und bruchfrei in ein industrielles zu befeuerndes Aggregat, z. B. einem großvolumigen Industrieofen, vermauert werden. Die Porosität, die über den Pressdruck gesteuert eingestellt werden kann, liegt zwischen 23 und 45, insbesondere zwischen 23 und 29 Vol.-%.

Der keramische Brand der Steine vollzieht sich dann in situ nach der Vermauerung im befeuerten Aggregat zunächst in einem feuerseitigen Oberflächenbereich und wandert allmählich weiter ins Innere, wonach sich die erfindungsgemäß erwünschten Eigenschaften, insbesondere bezüglich Schwindung und Wärmeleitfähigkeit in den gebrannten Zonen einstellen.

Vorzugsweise werden die grünen gepressten Steine in einem keramischen Brennofen, z. B. einem Tunnelofen, keramisch gebrannt zwischen 1200 und 1800, insbesondere zwischen 1400 und 1700 °C. Dabei ändert sich die Porosität nicht oder nur unwesentlich und die erwünschte erfindungsgemäße geringe Wärmeleitfähigkeit kann dadurch gewährleistet werden. Die Wärmeleitfähigkeit liegt z. B. zwischen 10 und 50, insbesondere zwischen 15 und 35 % niedriger als bei den üblicherweise verwendeten dichten Arbeitsfuttersteinen gleicher Werkstoffzusammensetzungen mit bis 21 Vol.-% offener Porosität. Die Kaltdruckfestigkeit liegt zwischen 30 und 100, insbesondere zwischen 45 und 80 MPa.

Anhand der folgenden Beispiele wird insbesondere die Überlegenheit erfindungsgemäßer grobkeramischer Erzeugnisse gegenüber Erzeugnissen nach dem nächstliegenden Stand der Technik gemäß DE 10 2006 040 269 B4 und gegenüber bekannten dichten Erzeugnissen verdeutlicht.

### Beispiel 1

Es wurden Steine auf Basis gleicher Werkstoffe und gleicher mineralogischer Zusammensetzung (84 Gew.-% Magnesia, 16 Gew.-% Schmelzspinell) mit jeweils gleichem Bindemittel, nämlich Phenolharz und Wasser mit jeweils gleicher Bindemittelmenge von 6 Gew.-% bezogen auf das trockene Gemenge und jeweils gleichen Herstellungsparametern hergestellt, die
a) entsprechend DE 10 2006 040 269 B4 einen geringen Anteil Körnung > 0,5 mm von 11 Gew.-%, geringe Körnungsanteile im Bereich 0,1 bis 0,5 mm von 4 Gew.-%, sowie 85 Gew.-% < 0,1 mm aufweisen und mit einem Pressdruck von 40 MPa verdichtet wurden
b) entsprechend der vorliegenden Erfindung einen geringen Anteil Körnung > 0,5 mm von 11 Gew.-%, erhöhte Körnungsanteile im Bereich 0,1 bis 0,5 mm von 37 Gew.-%, sowie 52 Gew.-% < 0,1 mm aufweisen und mit einem Pressdruck von 40 MPa verdichtet wurden
c) entsprechend dichten feuerfesten Steinen nach dem meist angewendeten Stand der Technik einen hohen Anteil Körnung > 0,5 mm von 54 Gew.-%; Körnungsanteile im Bereich 0,1 bis 0,5 mm von 9 Gew.-%, sowie 37 Gew.-% < 0,1 mm aufweisen und mit einem Pressdruck von 100 MPa verdichtet wurden.

Alle Steine wurden bei 1600 °C in einem Tunnelofen 50 Stunden oxidierend gebrannt. Es wurden die Korngrößenverteilung der Mischungen nach DIN 66165-1, die Brennschwindung durch Abmessen, die Fertigrohdichte durch Abmessen und Wiegen, die offene Porosität nach DIN EN 993-1, die Kaltdruckfestigkeit nach DIN EN 993-5, die Kaltbiegefestigkeit nach DIN EN 993-6, die Gasdurchlässigkeit nach DIN EN 993-4, die irreversible Längenänderung nach DIN EN 993-10 über 12 Std. bei 1400 °C, 1500 °C und 1600 °C bestimmt. Die Wurzel aus dem Quotienten von Gasdurchlässigkeit und offener Porosität ist ein Maß für die Infiltrationsempfindlichkeit. Die Temperaturwechselbeständigkeit wurde nach DIN EN 993-11 an Luft bei einer erhöhten Prüftemperatur von 1100 °C bestimmt. Weiterhin wurden die Steine einem Mehrfachbrand unterzogen, um die Volumenbeständigkeit bei hohen Einsatztemperaturen zu beurteilen, indem nach dem Herstellungsbrand das Produkt dabei mehrfach bei der Herstellungsbrenntemperatur gebrannt und nach jedem Brand das Volumen durch Abmessen bestimmt wurde.

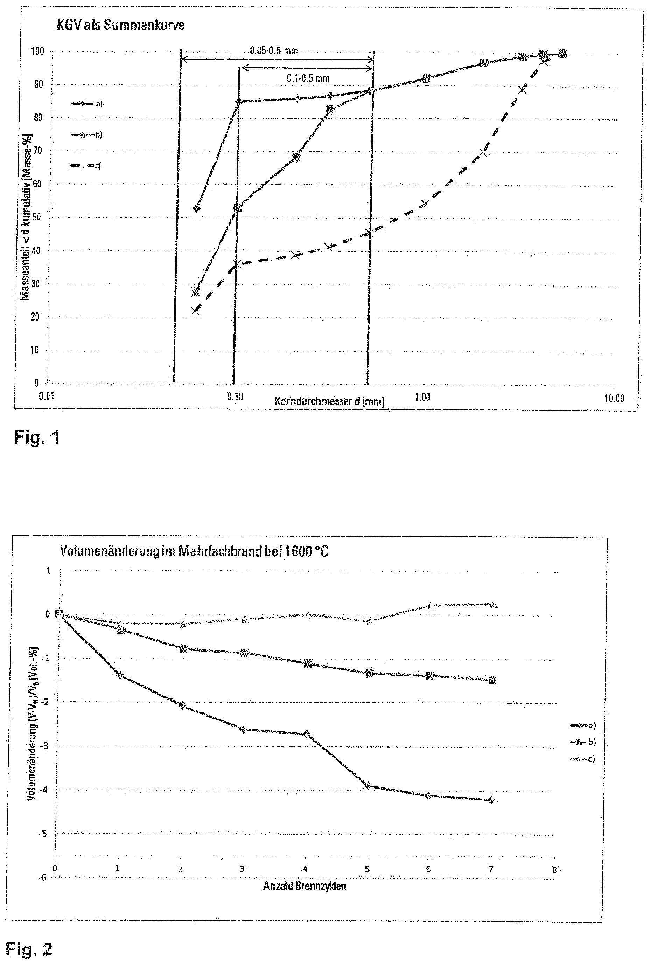

Fig. 1 zeigt die Korngrößenverteilung im Beispiel 1 für a), b) und c) als Summenkurve.

Die folgende Tabelle 1 zeigt die Ergebnisse des Beispiels 1.

**Tab. 1: Eigenschaftswerte von Steinen nach a), b) und c)**

| Bezeichnung: | | a) | b) | c) |
|---|---|---|---|---|
| Verdichtung | MPa | 40 | 40 | 90-150 |
| Brenntemperatur | °C | 1600 | 1600 | 1600 |
| | | | | |
| Fertigrohdichte | g/cm³ | 2.64 | 2.63 | 2.90 |
| | | | | |
| Kaltdruckfestigkeit | MPa | 72.5 | 65.3 | 68.3 |
| Kaltbiegefestigkeit | MPa | 6.3 | 5.2 | 5.1 |
| | | | | |
| offene Porosität | Vol.-% | 25.7 | 24.6 | 17.0 |
| Gasdurchlässigkeit | nPm | 1.6 | 5.3 | 3.5 |
| Infiltrationsempfindlichkeit | 10⁻⁶ m | 2.5 | 4.6 | 4.5 |
| | | | | |
| Temperaturwechselbeständigkeit/ Luft | Zyklen | 17 | >30 | >30 |
| | | | | |
| Brennschwindung | lin.-% | 1.79 | 0.64 | 0.30 |
| | | | | |
| irrev. Längenänderung 1400 °C | lin.-% | -0.23 | -0.07 | 0.00 |
| irrev. Längenänderung 1500 °C | lin.-% | -0.35 | -0.18 | -0.05 |
| irrev. Längenänderung 1600 °C | lin.-% | -0.50 | -0.32 | -0.10 |

Die Steineigenschaften im Vergleich zu den konventionellen dichten Steinen nach c) verändern sich im Falle von a), in dem alle Körnungsanteile zugunsten des Mehlanteils in der Mischung verringert wurden und der Pressdruck bei der Formgebung deutlich gesenkt wurde, dahingehend, dass nach dem Pressen die Fertigrohdichte signifikant verringert eingestellt ist und die offene Porosität stark erhöht ist. Die Kaltdruckfestigkeit dieser Steine ist gegenüber der der dichten Steine leicht erhöht, die Kaltbiegefestigkeit ist höher. Die Gasdurchlässigkeit und die Infiltrationsempfindlichkeit sind verringert. Neben diesen positiv zu bewertenden Veränderungen ist die Brennschwindung deutlich erhöht und auch das Nachschwinden aus der Nachschwinden-Prüfung der Steine ist mehr als verdoppelt und setzt bereits bei 1400 °C ein. Diese Veränderungen zeigen die problematische bzw. mangelhafte Volumenbeständigkeit der Produkte nach a) beim Herstellungsbrand und im Einsatz. Die Temperaturwechselbeständigkeit nimmt gegenüber Steinen nach c) deutlich ab. Der Probekörper zerbricht nach 17 Abschreckzyklen.

Im erfindungsgemäßen Fall von b), in dem signifikante Teile der verringerten Grobund Mittelkornanteile in den Bereich 0,1 bis 0,5 mm verschoben wurden, ist die Verringerung der Fertigrohdichte und die Erhöhung der offenen Porosität vergleichbar zu a). Gegenüber a) erhöhen sich die Gasdurchlässigkeit und die Infiltrationsempfindlichkeit, wobei letztere im Bereich der dichten Produkte entsprechend c) bleibt.

Die Brennschwindung ist dagegen gegenüber a) mehr als halbiert und die Verringerung des Nachschwindens ist überraschend hoch. Gegenüber c) bleiben die Kaltdruckfestigkeit und die Kaltbiegefestigkeit weiterhin sicher im für dichte Steine typischen Bereich. Die Temperaturwechselbeständigkeit ist mit > 30 Abschreckzyklen ohne Bruch auf dem gleichen hohen Niveau wie bei den dichten Produkten nach c).

Ein Prüfverfahren, das die Volumenbeständigkeit feuerfester Produkte zeigt, ist die Bestimmung des Mehrfachbrand-Verhaltens bei 1600 °C. Dabei wird nach dem Herstellungsbrand das Produkt mehrfach wiederholt im Brennaggregat gebrannt und jeweils das Volumen bestimmt.

Fig. 2 zeigt die Volumenveränderung im Mehrfachbrand von Steinen a), b) und c).

Bei dichten Steinen nach c) ist die Volumenänderung bezogen auf das Ausgangsvolumen der Steine nach sieben zusätzlichen Brennzyklen nahezu 0 %. Für Steine nach a) beträgt die Volumenänderung nach sieben zusätzlichen Brennzyklen bereits über 4 %. Abgesehen davon, dass die in den Steinen eingestellte hohe Porosität bei a) verlorengeht und sich wieder eine höhere Wärmeleitfähigkeit einstellt, ist eine lang andauernde Passgenauigkeit von feuerfesten Zustellungen aus solchen feuerfesten Steinen nicht zu erzielen. Bei Steinen entsprechend b) ist die Volumenänderung bezogen auf das Ausgangsvolumen der Steine mit 1,5 % deutlich geringer als bei Steinen nach a), so dass der Vorteil der niedrigen Wärmeleitfähigkeit erhalten bleibt.

### Bestimmung der Wärmeleitfähigkeit an Steinen nach b) und c)

Zur Bestätigung der angestrebten Verringerung der Wärmeleitfähigkeit wurde an poröseren Steinen nach b) mit dem erfindungsgemäßen Kornaufbau und an Steinen nach c), die den üblichen dichten sogenannten Drehrohrsteinen nach dem Stand der Technik entsprechen, Wärmeleitfähigkeitsbestimmungen nach dem Heißdrahtverfahren DIN 993-15 durchgeführt mit folgendem Ergebnis in Tabelle 2:

**Tab. 2: Ergebnisse von Wärmleitfähigkeitsbestimmungen nach dem Heißdrahtverfahren an Steinen nach b) und c)**

| | | b) | c) |
|---|---|---|---|
| Wärmeleitfähigkeit 300 °C | [W/(mK)] | 5.6 | 6.7 |
| Wärmeleitfähigkeit 700 °C | [W/(mK)] | 3.7 | 5.1 |
| Wärmeleitfähigkeit 1000 °C | [W/(mK)] | 3.0 | 4.0 |

Die Messungen wurden bei 300 °C, 700 °C und 1000 °C durchgeführt, Tab. 2. Die Ergebnisse zeigen für die erfindungsgemäßen Steine nach b) deutlich verringerte Wärmeleitfähigkeitswerte. Bezogen auf die Wärmeleitfähigkeit von c) ist die Wärmeleitfähigkeit von b) bei 300 °C um 16 %, bei 700 °C um 27 % und bei 1000 C um 25 % reduziert.

### Beispiel 2

### Beispiel 2 zeigt die Grenzwertigkeit des Kornaufbaus gegenüber höheren Grobkornanteilen

Wie im ersten Beispiel wurden Steine auf Basis von 84 % Magnesia und 16 % Schmelzspinell hergestellt, die
b) entsprechend der Erfindung einen geringen Anteil Körnung > 0.5 mm von 11 Gew.-%, erhöhte Körnungsanteile im Bereich 0.1-0.5 mm von 37 Gew.-% sowie 52 Gew.-% < 0.1 mm aufweisen und mit einem Pressdruck von 40 MPa verdichtet wurden (aus Beispiel 1), und
d) durch Variation der Korngrößenverteilung des Kornaufbaus bei sonst gleichen Herstellungsparametern außerhalb des beanspruchten Bereiches liegen. Der Unterschied in der Korngrößenverteilung ist charakterisiert durch eine Verschiebung von Kornanteilen aus dem Bereich 0.1-0.5 mm in den nächstgröberen Körnungsbereich 0.5-1 mm, so dass die Anteile 0.1-0.5 mm mit ca. 28 Gew.-% leicht unterhalb des bei der Erfindung aufgefundenen Minimumwertes von 30 Gew.-% für diese Körnung liegen und dass die gröberen Anteile mit ca. 30 % leicht oberhalb des maximalen Anteiles liegen.

Alle Steine wurden bei 1600 °C gebrannt und entsprechend der Steine aus dem ersten Beispiel geprüft.

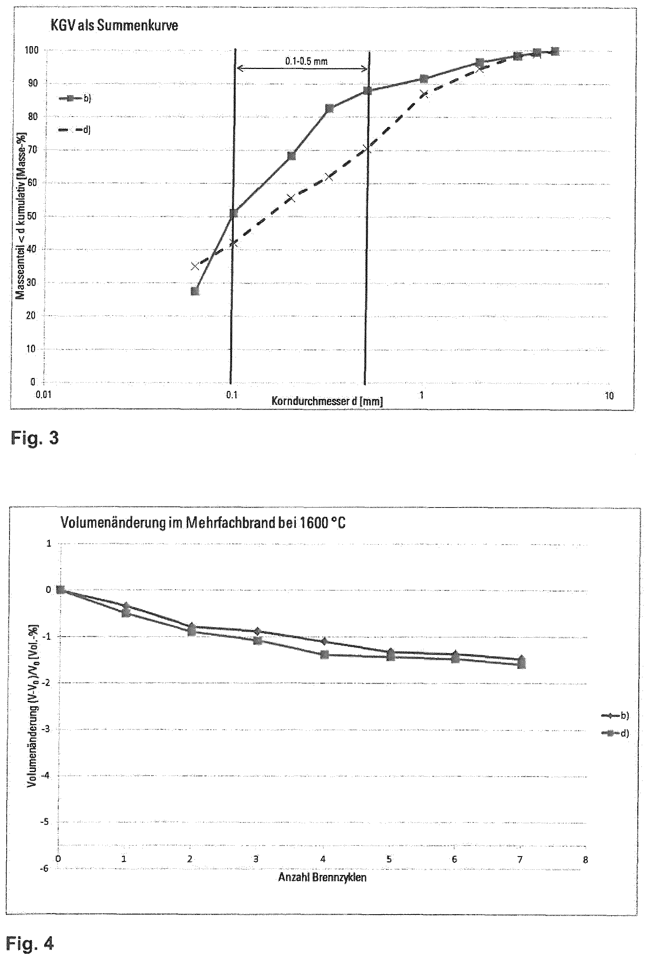

Fig. 3 zeigt die Korngrößenverteilung für b) und d) als Summenkurve dargestellt.

Die folgende Tabelle 3 zeigt die Ergebnisse des Beispiels 2.

**Tab. 3: Eigenschaftswerte von Steinen nach b) und d)**

| Bezeichnung: | | b) | d) |
|---|---|---|---|
| Verdichtung | MPa | 40 | 40 |
| Brenntemperatur | °C | 1600 | 1600 |
| | | | |
| Fertigrohdichte | g/cm³ | 2.63 | 2.78 |
| | | | |
| Kaltdruckfestigkeit | MPa | 65.3 | 72.4 |
| Kaltbiegefestigkeit | MPa | 5.2 | 5.1 |
| | | | |
| offene Porosität | Vol.-% | 24.6 | 20.5 |
| Gasdurchlässigkeit | nPm | 5.3 | 4.5 |
| Infiltrationsempfindlichkeit | 10⁻⁶ m | 4.6 | 4.7 |
| | | | |
| Temperaturwechselbeständigkeit/ Luft | Zyklen | >30 | >30 |
| | | | |
| Brennschwindung | lin.-% | 0.64 | 0.72 |
| | | | |
| irrev. Längenänderung 1400 °C | lin.-% | -0.07 | 0.00 |
| irrev. Längenänderung 1500 °C | lin.-% | -0.18 | -0.08 |
| irrev. Längenänderung 1600 °C | lin.-% | -0.32 | -0.31 |

Die Fertigrohdichte von d) ist bedingt durch die Unterschiede in der Korngrößenverteilung gegenüber b) deutlich erhöht. Die offene Porosität fällt auf 20.5 Vol.-% ab und liegt somit im Bereich von dichten Produkten nach dem Stand der Technik und unterhalb des beanspruchten Bereiches für die offene Porosität, Tabelle 3. Die Infiltrationsempfindlichkeit ist trotz einer leichten Erhöhung vergleichbar mit der der dichten Produkte im Fall c) aus Beispiel 1. Auch die Festigkeiten gleichen sich denen üblicher dichter Feuerfestprodukte wieder an, wobei die Brennschwindung gegenüber den dichten Steinen nach c) aus Beispiel 1 erhöht und gegenüber erfindungsgemäßen Steinen entsprechend b) leicht erhöht ist. Das Nachschwinden von d) setzt wie bei anderen dichten Produkten erst bei höheren Temperaturen ein und ist aber, bei deutlich niedrigerer offener Porosität, bei 1600 °C dem Nachschwinden von b) vergleichbar. Die Temperaturwechselbeständigkeit ist gut.

Das Verhalten der erfindungsgemäß höher porösen und bezüglich ihrer Volumenbeständigkeit optimierten Steine nach b) in der Mehrfachbrand-Prüfung ist mit dem der dichteren Produkte nach d) vergleichbar, Fig. 4.

### Beispiel 3

Beispiel 3 zeigt Ergebnisse bei noch weiter erhöhter Porosität und der Veränderung des Kornaufbaus zwischen dem des unteren Korndurchmesser von 0.1 mm sowie des oberen Korndurchmessers von 0.5 mm des Mittelkornanteils.

Steine auf Basis gleicher Rohstoffe und gleicher mineralogischer Zusammensetzung mit 84 % Magnesia und 16 % Schmelzspinell wurden hergestellt, die
a1) entsprechend DE 10 2006 040 269 B4 einen geringen Anteil Körnung > 0.5 mm von 11 Gew.-%, geringe Körnungsanteile im Bereich 0.1-0.5 mm von 4 Gew.-% sowie 85 Gew.-% < 0.1 mm aufweisen und mit einem Pressdruck von nur 10 MPa verdichtet wurden, um höhere Porosität beim Fertigprodukt einzustellen, und
e) entsprechend der Erfindung einen geringen Anteil Körnung > 0.5 mm von 11 Gew.-%, erhöhte Körnungsanteile im Bereich 0.1-0.5 mm von 48 Gew.-%, hier hauptsächlich zwischen 0.1 -0.2 mm liegend. Der Anteil < 0.1 mm ist 35 Gew.-%. Diese Steine wurden weiterhin mit einem Pressdruck von 40 MPa verdichtet, und
f) entsprechend der Erfindung einen geringen Anteil Körnung > 0.5 mm von 11 Gew.-%, erhöhte Körnungsanteile im Bereich 0.1-0.5 mm von 50 Gew.-%, hier hauptsächlich zwischen 0.3 -0.5 mm liegend. Der Anteil < 0.1 mm ist 34 Gew.-%. Auch diese Steine wurden mit einem Pressdruck von 40 MPa verdichtet.

Alle Steine wurden bei 1600 °C gebrannt und entsprechend der Steine aus dem ersten Beispiel geprüft.

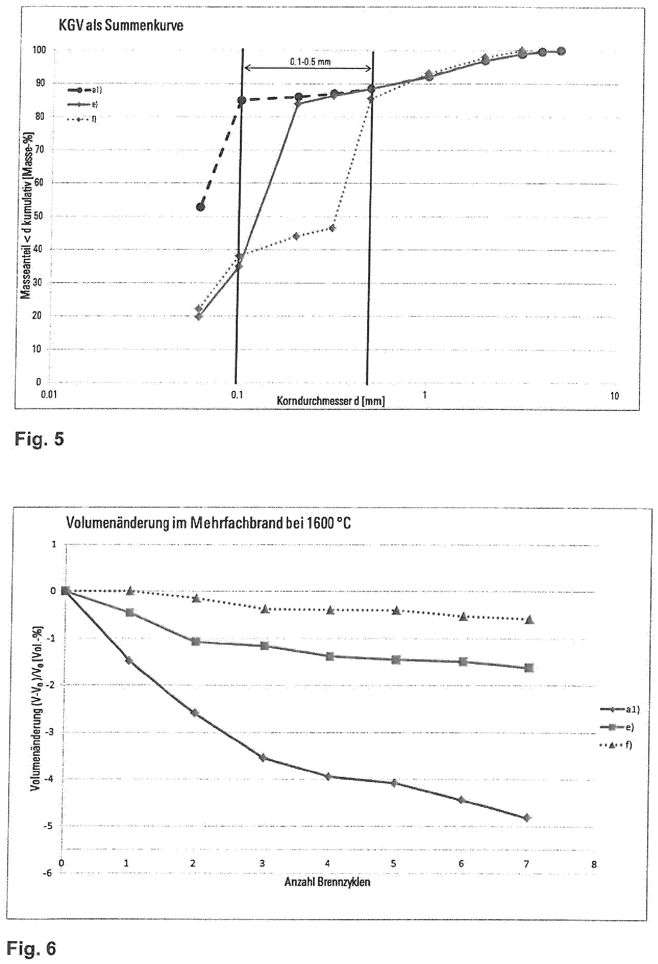

Fig. 5 zeigt die Korngrößenverteilung für a1), e) und f) als Summenkurve dargestellt.

Die Steineigenschaften im Vergleich zu den Steinen nach a) verändern sich im Falle von a1), in dem der Pressdruck auf 10 MPa gesenkt wurde, dahingehend, dass die Fertigrohdichte sich auf 2.45 g/cm³ verringert und die offene Porosität auf 29.2 Vol.-% ansteigt, Tabelle 4. Die Infiltrationsempfindlichkeit von a1) erhöht sich gegenüber Steinen nach a) aus Beispiel 1. Während des Herstellungsbrandes sind die Steine um ca. 1.9 % geschwunden. Die Kaltdruckfestigkeit dieser Steine ist mit ca. 45 MPa verringert, die Kaltbiegefestigkeit ist nur leicht auf 5.2 MPa verringert. Bei den Nachwachsen/Nachschwinden Prüfungen bei 1400 °C, 1500 °C und 1600 °C treten bleibende irreversible Längenänderungen von -0.12 lin.-%, -0.36 lin.-% und -0.67 lin.-% auf und zeigen bezogen auf a) eine weiter verringerte Volumenbeständigkeit des Produktes an. Auch die Temperaturwechselbeständigkeit verringert sich merkbar auf 8 Abschreckzyklen bis zum Bruch.

Im erfindungsgemäßen Fall von e), in dem signifikante Teile der verringerten Grobkornanteile in den Bereich 0.1-0.5 mm verschoben werden und im überwiegenden Teil durch Körner zwischen 0.1-0.2 mm dargestellt werden, tritt bei unverändertem Pressdruck von 40 MPa eine Verringerung der Fertigrohdichte auf 2.50 g/cm³ auf und die erhöhte offene Porosität von 28.5 % ist vergleichbar mit der von a1). Die Infiltrationsempfindlichkeit beginnt sich zu erhöhen. Die Brennschwindung erhöht sich anders als bei a1) mit 0.56 % nicht. Die Volumenbeständigkeit ist gegenüber a1) deutlich erhöht, was durch ein Einsetzen der Nachschwindung erst bei höherer Temperatur und niedrigere Nachschwindungswerte bei der irreversiblen Längenänderung angezeigt wird. Bei der Bestimmung der Temperaturwechselbeständigkeit tritt hier bis > 30 Abschreckzyklen kein Bruch auf.

**Tab. 4: Eigenschaftswerte von Steinen nach a1), e) und f).**

| Bezeichnung: | | a1) | e) | f) |
|---|---|---|---|---|
| Verdichtung | MPa | 10 | 40 | 40 |
| Brenntemperatur | °C | 1600 | 1600 | 1600 |
| | | | | |
| Fertigrohdichte | g/cm³ | 2.45 | 2.50 | 2.64 |
| | | | | |
| Kaltdruckfestigkeit | MPa | 44.7 | 52.8 | 54.4 |
| Kaltbiegefestigkeit | MPa | 5.2 | 5.8 | 5.3 |
| | | | | |
| offene Porosität | Vol.-% | 29.2 | 28.5 | 23.8 |
| Gasdurchlässigkeit | nPm | 4.9 | 11.6 | 20.5 |
| Infiltrationsempfindlichkeit | 10⁻⁶ m | 4.1 | 6.4 | 9.3 |
| | | | | |
| Temperaturwechselbeständigkeit/ Luft | Zyklen | 8 | >30 | >30 |
| | | | | |
| Brennschwindung | lin.-% | 1.94 | 0.56 | 0.29 |
| | | | | |
| irrev. Längenänderung 1400 °C | lin.-% | -0.12 | 0.00 | 0.00 |
| irrev. Längenänderung 1500 °C | lin.-% | -0.36 | -0.13 | -0.09 |
| irrev. Längenänderung 1600 °C | lin.-% | -0.67 | -0.25 | -0.15 |

Im weiteren erfindungsgemäßen Fall von f), in dem signifikante Teile der verringerten Grob- und Mittelkornanteile in den Bereich 0.1-0.5 mm verschoben werden und hier im überwiegenden Teil durch Körner zwischen 0.3-0.5 mm dargestellt werden, tritt bei unverändertem Pressdruck von 40 MPa eine Verringerung der Fertigrohdichte auf 2.64 g/cm³ auf und die Erhöhung der offenen Porosität auf 23.8 % ist geringer als bei a1) und e). Sie liegt aber deutlich höher als bei dichten Produkten und somit im erfindungsgemäßen Bereich. Die Infiltrationsempfindlichkeit ist bei Steinen nach f) erhöht. Die Brennschwindung sinkt auf 0.29 lin.-%. Die irreversible Längenänderung dieses poröseren Produktes verringert sich nochmals und wird vergleichbar mit der von dichten Produkten nach c) aus Beispiel 1. Gleiches gilt für die Temperaturwechselbeständigkeit.

Fig. 6 zeigt die Volumenänderung im Mehrfachbrand von Steinen nach a1), e) und f).

Die Volumenänderung im Mehrfachbrand bei den nicht erfindungsgemäßen porösen Steinen nach a1) ist geprägt durch ein starkes Schwinden. Bezogen auf das Ausgangsvolumen des Fertigproduktes gehen nach 7 zusätzlichen Brennzyklen ca. 5 Vol.-% verloren, Fig.6. Bei vergleichbarer offener Porosität im Fertigproduktzustand von e) verliert dieses Produkt nur geringe Volumenanteile und nach 7 zusätzlichen Brennzyklen ist nur um ca. 1.6 Vol.-% geschwunden. Auch die erfindungsgemäß poröseren Steine nach f) zeigen die vorteilhafte Volumenstabilität deutlich und verlieren nach 7 zusätzlichen Brennzyklen sogar nur ca. 0.6 Vol.-%.

### Beispiel 4

In den ersten Beispielen 1 bis 3 wurden die Vorteile des erfindungsgemäßen Kornaufbaus für Magnesiaspinellsteine erläutert. Zum Nachweis der Wirksamkeit der Erfindung bei Produkten aus anderen feuerfesten Werkstoffen wurden beispielsweise Steine auf Basis von 84 Masse-% eisenreicher Sintermagnesia in Kombination mit 16 Masse-% Schmelzpleonast und Steine auf Basis von Schamotte und auf Basis von Andalusit hergestellt. Bei der Herstellung der beiden letzteren wurden den Mischungen Bindeton zugegeben (5 %), wie es bei solchen Steinen üblich ist.

Die Steine aus den unterschiedlichen feuerfesten Werkstoffen wurden wie in Beispiel 1 jeweils mit Korngrößenverteilungen a), b) und c) versehen, Fig. 1 aus Beispiel 1. Dabei war
a) entsprechend DE 10 2006 040 269 B4 mit einem geringen Anteil Körnung > 0,5 mm von 11 Gew.-%, mit geringen Körnungsanteilen im Bereich 0,1 bis 0,5 mm von 4 Gew.-%, sowie 85 Gew.-% < 0,1 mm versehen und mit einem Pressdruck von 40 MPa verdichtet,
b) entsprechend der vorliegenden Erfindung mit einem geringen Anteil Körnung > 0.5 mm von 11 Gew.-%, erhöhten Körnungsanteilen im Bereich 0.1 bis 0.5 mm von 37 Gew.-%, sowie 52 Gew.-% < 0.1 mm versehen und auch mit einem Pressdruck von 40 MPa verdichtet,
c) entsprechend dichten feuerfesten Steinen nach dem meist angewendeten Stand der Technik mit einem hohen Anteil Körnung > 0.5 mm von 54 Gew.-%; Körnungsanteilen im Bereich 0.1 bis 0.5 mm von 9 Gew.-%, sowie 37 Gew.-% < 0.1 mm versehen und jeweils mit produkttypischem Pressdruck verdichtet.

In Tabelle 5 sind die produkttypischen Pressdrücke und Brenntemperaturen sowie die Ergebnisse aus den Bestimmungen der Fertigrohdichte durch Abmessen und Wiegen, der offenen Porosität nach DIN EN 993-1, der Kaltdruckfestigkeit nach DIN EN 993-5, der Kaltbiegefestigkeit nach DIN EN 993-6, der Gasdurchlässigkeit nach DIN EN 993-4, der irreversiblen Längenänderung nach DIN EN 993-10 über 12 Std. bei 1300° C, 1400° C und 1500° C der Temperaturwechselbeständigkeit nach DIN EN 993-11 an Luft bei einer erhöhten Prüftemperatur von 1200 °C und die Wurzel aus dem Quotienten von Gasdurchlässigkeit und offener Porosität als Maß für die Infiltrationsempfindlichkeit angegeben.

**Tab. 5: Eigenschaftswerte von Magnesiapleonaststeinen auf Basis von eisenreicher Sintermagnesia, Schamotte- und Andalusitsteinen, jeweils nach a), b) und c)**

| Bezeichnung | | eisenreiche Sintermagnesia mit Pleonast | | | Schamotte mit 5 % Bindeton | | | Andalusit mit 5 % Bindeton | | |
|---|---|---|---|---|---|---|---|---|---|---|
| | | a) | b) | c) | a) | b) | c) | a) | b) | c) |
| Verdichtung | MPa | 40 | 40 | 150 | 40 | 40 | 90 | 40 | 40 | 115 |
| Brenntemperatur | °C | 1450 | 1450 | 1450 | 1400°C | 1400 | 1400 | 1450 | 1450 | 1450 |
| | | | | | | | | | | |
| Fertigrohdichte | g/cm³ | 2.23 | 2.40 | 3.09 | 1.95 | 2.04 | 2.21 | 2.13 | 2.21 | 2.57 |
| | | | | | | | | | | |
| Kaltdruckfestigkeit | MPa | 38.9 | 39.9 | 97.3 | 33.3 | 39.7 | 53.7 | 100.4 | 90.2 | 111.8 |
| Kaltbiegefestigkeit | MPa | 4.2 | 3.5 | 5.5 | 4.5 | 5.5 | 6.1 | 14.4 | 12.8 | 15.8 |
| | | | | | | | | | | |
| offene Porosität | Vol.% | 32.1 | 27.6 | 14.5 | 29.3 | 26.6 | 17.3 | 26.6 | 24.5 | 12.4 |
| Gasdurchlässigkeit | nPm | 4.1 | 3.9 | 3.9 | 1.9 | 2.3 | 1.9 | 1.7 | 2.1 | 2.4 |
| Infiltrationsempfindlichkeit | 10⁻⁶ m | 3.6 | 3.8 | 5.2 | 2.6 | 2.9 | 3.3 | 2.5 | 2.9 | 4.4 |
| | | | | | | | | | | |
| Temperaturwechselbeständigkeit/ Luft | Zyklen | 5 | >30 | >30 | >30 | >30 | >30 | 4 | >30 | >30 |
| | | | | | | | | | | |
| Brennschwindung | lin.-% | 0.62 | 0.30 | 0.21 | 1.80 | 1.10 | 0.78 | 0.20 | -0.09 | -0.80 |
| | | | | | | | | | | |
| irrev. Längenänderung 1300 °C | lin.-% | 0.00 | 0.02 | -0.03 | -0.04 | -0.04 | -0.03 | 0.00 | 0.00 | 0.03 |
| irrev. Längenänderung 1400 °C | lin.-% | -0.04 | -0.02 | -0.05 | -1.47 | -0.62 | -0.12 | -0.07 | -0.02 | 0.00 |
| irrev. Längenänderung 1500 °C | lin.-% | -0.63 | -0.16 | -0.10 | -3.60 | -1.88 | -1.30 | -0.85 | -0.31 | -0.09 |

### Magnesiapleonaststeine auf Basis von eisenreicher Sintermagnesia:

Steine nach a) entsprechend DE 10 2006 040 269 B4 unterscheiden sich von den dichten Steinen nach c) durch eine niedrigere Fertigrohdichte von 2.23 g/cm³ und eine auf 32.1 Vol.-% erhöhte offene Porosität. Die Kaltdruckfestigkeit sinkt auf 38.9 MPa und die Kaltbiegefestigkeit auf 4.2 MPa. Die Infiltrationsempfindlichkeit verringert sich auf 3.6 µm. Verbunden mit der Erhöhung der offenen Porosität verdreifacht sich die Brennschwindung auf 0.62 lin.-%. Die irreversible Längenänderung zeichnet sich durch ein Nachschwinden ab 1500 °C Prüftemperatur aus, das das 6-fache gegenüber c) beträgt. Die Temperaturwechselbeständigkeit ist stark reduziert auf 5 Abschreckzyklen bis zum Bruch des Probekörpers. Diese Steine sind nicht Temperaturwechselbeständig.

Steine mit erfindungsgemäßem Kornaufbau nach b) besitzen eine Fertigrohdichte von 2.40 g/cm³, gegenüber c) ist ihre offene Porosität verdoppelt. Die Kaltdruckfestigkeit ist 39.9 MPa und die Kaltbiegefestigkeit 3.5 MPa. Die Infiltrationsempfindlichkeit verringert sich hier auf 3.8 µm. Bedingt durch den erfindungsgemäßen Kornaufbau erhöht sich die Brennschwindung nur leicht auf 0.3 lin.-% und auch die irreversible Längenänderung zeigt mit -0.16 lin.-% ein deutlich schwächeres Zunehmen der Nachschwindung als Steine entsprechend a). Bei der Bestimmung der Temperaturwechselbeständigkeit trat bei bis zu 30 Abschreckzyklen kein Bruch auf.

### Schamottesteine:

Im Vergleich mit den Eigenschaftswerten von c) haben die Schamottesteine nach a) eine verringerte Fertigrohdichte von 1.95 g/cm³, die offene Porosität ist auf 29.3 Vol.-% erhöht. Die Kaltdruckfestigkeit sinkt auf 33.3 MPa und die Kaltbiegefestigkeit auf 4.5 MPa. Die Infiltrationsempfindlichkeit verringert sich auf 2.6 µm. Verbunden mit der Erhöhung der offenen Porosität erhöht sich die Brennschwindung auf 1.8 lin.-%. Die irreversible Längenänderung zeichnet sich durch ein deutliches Nachschwinden ab 1400 °C Prüftemperatur mit -1.47 lin.-% aus, bei der nächsthöheren Prüftemperatur von 1500 °C erhöht sich das Nachschwinden stark auf -3.6 lin.-%. Bei der Bestimmung der Temperaturwechselbeständigkeit trat bei bis zu 30 Abschreckzyklen kein Bruch auf.

Schamottesteine mit erfindungsgemäßem Kornaufbau nach b) besitzen eine Fertigrohdichte von 2.04 g/cm³, gegenüber c) ist ihre offene Porosität erhöht und beträgt 26.6 Vol.-%. Die Kaltdruckfestigkeit ist 39.7 MPa und die Kaltbiegefestigkeit 5.5 MPa. Die Infiltrationsempfindlichkeit verringert sich hier auf 2.9 µm. Bedingt durch den erfindungsgemäßen Kornaufbau ist die Brennschwindung nur 1.1 lin.-% und die irreversible Längenänderung zeigt mit -0.62 lin.-% eine vorteilhaftere Nachschwindung als Steine entsprechend a). Bei 1500 °C erhöht sich die irreversible Längenänderung auf -1.88 % und bleibt damit deutlich geringer als bei Steinen nach a). Bei der Bestimmung der Temperaturwechselbeständigkeit trat bei bis zu 30 Abschreckzyklen kein Bruch auf.

### Andalusitsteine:

Die Eigenschaften von Andalusitsteinen spiegeln die mineralogische Phasenumwandlung des Hauptrohstoffes wider. Bedingt durch die Mullitisierung des Andalusites ist die Brennschwindung der dichten Steine nach c) negativ, die dichten Steine wachsen um 0.8 lin.-%. Bei Steinen nach a) wird das aus der Phasenumwandlung resultierende Wachsen durch ein stärkeres Versintern des sehr feinkornhaltigen Materiales überkompensiert, die Steine schwinden um 0.2 lin.-%. Die Fertigrohdichte verringert sich auf 2.13 g/cm³ und die offene Porosität steigt auf 26.6 Vol.-% an. Die Kaltdruckfestigkeit ist 100.4 MPa und die Kaltbiegefestigkeit ist 14.4 MPa. Die Infiltrationsempfindlichkeit verringert sich auf 2.5 µm. Ein signifikantes Nachschwinden setzt ab 1500 °C mit einem Wert bei der irreversiblen Längenänderung von -0.85 lin.-% ein. Die Temperaturwechselbeständigkeit ist mit 4 Abschreckzyklen bis zum Bruch schlecht.

Erfindungsgemäße Andalusitsteine nach b) bleiben im Bereich der Brenndehnung, ihre Fertigrohdichte verringert sich auf 2.21 g/cm³ und die offene Porosität steigt auf 24.5 Vol.-% an. Die Kaltdruckfestigkeit ist 90.2 MPa und die Kaltbiegefestigkeit ist 12.8 MPa. Das Nachschwinden setzt ab 1500 °C mit einem Wert bei der irreversiblen Längenänderung von -0.31 lin.-% ein, der gegenüber a) deutlich verringert ist. Die Infiltrationsempfindlichkeit verringert sich auf 2.9 µm. Bei der Bestimmung der Temperaturwechselbeständigkeit tritt bei bis zu 30 Abschreckzyklen kein Bruch auf.

Alle erfindungsgemäßen Steine nach b) zeigen unabhängig von der Werkstoffauswahl die Merkmale deutlich höherer offener Porosität gegenüber den dichten Produkten nach c) und unveränderter oder verringerter Infiltrationsempfindlichkeit, wobei die auftretenden Brennschwindungen und irreversiblen Längenänderungen sich in deutlich geringerem Maße verändern als bei poröseren Steinen nach a). Drastische Verluste bei der Temperaturwechselbeständigkeit wie bei den Steinen nach a) treten bei den erfindungsgemäßen Steinen nach b) nicht auf. Die Festigkeiten bleiben für die Magnesiaschmelzpleonaststeine, Schamottesteine und die Andalusitsteine, wie auch für die in den Beispielen 1 bis 3 genannten Magnesiaspinellsteine, im Bereich produkttypischer Werte.

Beispiel 4 soll die Erfindung nicht auf die angegebenen Werkstoffe begrenzen, sondern aufzeigen, dass die Erfindung unabhängig vom feuerfesten Werkstoff gelingt.

## Patentansprüche

1. Grobkeramisches, feuerfestes Erzeugnis aus mindestens einem körnigen feuerfesten Werkstoff,
**gekennzeichnet durch**
- eine offene Porosität zwischen 23 und 45 Vol.-%, insbesondere zwischen 23 und 29 Vol.%, und
- folgenden Kornaufbau des feuerfesten Werkstoffs:
Mehlkorn bis 0,1 mm: 20 bis 61, insbesondere 25 bis 55 Gew.-% Mittelkorn 0,1 bis 0,5 mm: 30 bis 55, insbesondere 35 bis 50 Gew.-% Grobkorn über 0,5 mm, insbesondere bis 8 mm, vorzugsweise bis
6 mm: 9 bis 25, insbesondere 10 bis 25 Gew.-%.

2. Erzeugnis nach Anspruch 1,
**dadurch gekennzeichnet, dass**
es in Form von durch Granulieren in einem Mischer erzeugten Mischergranalien, z. B. mit Granaliendurchmessern zwischen 0,1 und 5 mm, insbesondere zwischen 0,5 und 4 mm und/oder in Form von Aufbaugranalien, z.B. mit Granaliendurchmessern zwischen 2 und 15 mm, insbesondere zwischen 3 und 6 mm vorliegt, oder in Form eines Formkörpers, insbesondere eines gepressten Formkörpers vorliegt, oder eine ungeformte monolithische Auskleidung eines befeuerten bzw. befeuerbaren großvolumigen Industrieofens ist.

3. Erzeugnis nach Anspruch 1 oder 2,
**dadurch gekennzeichnet, dass** es mindestens ein für feuerfeste Erzeugnisse an sich bekanntes Bindemittel, insbesondere in Mengen bis 9 Gew.-%, vorzugsweise bis 6 Gew.-%, und/oder mindestens ein für feuerfeste Erzeugnisse an sich bekanntes Zusatzmittel, insbesondere in Mengen bis 10 Gew.-%, vorzugsweise bis 6 Gew.-%, und/oder mindestens einen für feuerfeste Erzeugnisse an sich bekannten Zusatzstoff, insbesondere in Mengen bis 10 Gew.-%, vorzugsweise bis 6 Gew.-% enthält.

4. Erzeugnis nach Anspruch 3,
**dadurch gekennzeichnet, dass**
es als Bindemittel Wasser und/oder Teer und/oder Pech und/oder vorzugsweise mindestens ein für feuerfeste Erzeugnisse üblicherweise verwendetes Kunstharzbindemittel, z. B. ein Phenolformaldehyd- oder Furan-oder Novolakharz, und/oder Ligninsulfonat enthält.

5. Erzeugnis nach einem oder mehreren der Ansprüche 1 bis 4,
**dadurch gekennzeichnet, dass**
es keramisch gebrannt oder ungebrannt oder getempert und ungebrannt ist.

6. Erzeugnis nach einem oder mehreren der Ansprüche 1 bis 5 in Form eines ungebrannten, grünen, gepressten Formkörpers und **gekennzeichnet durch**
Rohdichten zwischen 1,80 und 2,80, insbesondere zwischen 2,00 und 2,70 g/cm³, sowie Druckfestigkeiten zwischen 1,5 und 7, insbesondere zwischen 2 und 4 MPa, und z. B. eine Restfeuchte zwischen 0,1 und 0,6, insbesondere zwischen 0,2 und 0,5 Gew.-%.

7. Erzeugnis nach einem oder mehreren der Ansprüche 1 bis 6,
**dadurch gekennzeichnet, dass**
es keramisch gebrannt ist und eine Kaltdruckfestigkeit zwischen 30 und 100, insbesondere zwischen 45 und 80 MPa aufweist.

8. Erzeugnis nach einem oder mehreren der Ansprüche 1 bis 7,
**dadurch gekennzeichnet, dass**
der Werkstoff mindestens ein Werkstoff aus der folgenden Gruppe ist:
Magnesia, Doloma, Magnesiumaluminat-Spinell, Hercynit, Forsterit, Pleonast, Chromerz, Zirconia, Calciumaluminat, Calciumhexaaluminat, Alumina- und/oder alumosilicatischer Rohstoff, SiC, Bindeton, insbesondere aus der folgenden Gruppe Magnesia, Doloma, Schamotte, Andalusit, Forsterit, Bauxit, ganz besonderes aus der folgenden Gruppe
Magnesia mit Magnesiumaluminat-Spinell
Magnesia mit Hercynit
Magnesia mit Forsterit
Magnesia mit Pleonast
Magnesia mit Chromerz.

9. Verfahren zur Herstellung eines Erzeugnisses nach einem oder mehreren der Ansprüche 1 bis 8,
**dadurch gekennzeichnet, dass**
mindestens ein gekörnter feuerfester Werkstoff, aufweisend einen Kornaufbau gemäß Anspruch 1, mit einem für feuerfeste Erzeugnisse an sich bekannten Bindemittel in einem Mischer gemischt und daraus durch einen Granulierprozess ein Mischergranulat aus Granalien gebildet wird.

10. Verfahren nach Anspruch 9,
**dadurch gekennzeichnet, dass**
Mischergranalien mit Durchmessern zwischen 0,1 und 5, insbesondere zwischen 0,5 und 4 mm erzeugt werden.

11. Verfahren nach Anspruch 9 oder 10,
**dadurch gekennzeichnet, dass**
aus den Granalien des Mischergranulats oder direkt aus dem mindestens einem feuerfesten Werkstoff ohne vorherige Mischergranulation durch eine Aufbaugranulation ein Aufbaugranulat aus Granalien mit Durchmessern zwischen 2 und 15, insbesondere zwischen 3 und 6 mm erzeugt werden.

12. Verfahren nach einem oder mehreren der Ansprüche 9 bis 11,
**dadurch gekennzeichnet, dass**
mindestens ein Bindemittel gemäß Anspruch 4 verwendet wird.

13. Verfahren nach einem oder mehreren der Ansprüche 9 bis 12,
**dadurch gekennzeichnet, dass**
vor oder während des Granulierens
mindestens ein für feuerfeste Erzeugnisse an sich bekanntes Zusatzmittel, insbesondere in einer Menge bis 10, vorzugsweise bis 6 Gew.-%, und/oder mindestens ein für feuerfeste Erzeugnisse an sich bekannter Zusatzstoff, insbesondere in einer Menge bis 10, vorzugsweise bis 6 Gew.-%, zugesetzt wird.

14. Verfahren nach einem oder mehreren der Ansprüche 9 bis 13,
**dadurch gekennzeichnet, dass**
Formkörper mit Pressdrücken zwischen 10 und 60, insbesondere zwischen 20 und 40 MPa in einer Presse formgepresst werden, die Rohdichten zwischen 1,80 und 2,80, insbesondere zwischen 2,00 und 2,70 g/cm³ und Druckfestigkeiten zwischen 1,5 und 7, insbesondere zwischen 2 und 4 MPa aufweisen.

15. Verfahren nach Anspruch 14,
**dadurch gekennzeichnet, dass**
die Formkörper zwischen 60 und 200 °C, insbesondere zwischen 90 und 140°C, bis auf eine Feuchte < 0,6 Gew.-%, insbesondere zwischen 0,2 und 0,5 Gew.-%, getrocknet, insbesondere getempert werden.

16. Verfahren nach einem oder mehreren der Ansprüche 9 bis 15,
**dadurch gekennzeichnet,dass**
mindestens ein feuerfester Werkstoff aus der folgenden Gruppe verwendet wird:
Magnesia, Doloma, Magnesiumaluminat-Spinell, Hercynit, Forsterit, Pleonast, Chromerz, Zirconia, Calciumaluminat, Calciumhexaaluminat, Alumina- und/oder alumosilicatischer Rohstoff, SiC, Bindeton, insbesondere aus der folgenden Gruppe Magnesia, Doloma, Schamotte, Andalusit, Forsterit, Bauxit, ganz besonderes aus der Gruppe
Magnesia mit Magnesiumaluminat-Spinell
Magnesia mit Hercynit
Magnesia mit Forsterit
Magnesia mit Pleonast
Magnesia mit Chromerz.

17. Verfahren nach einem oder mehreren der Ansprüche 14 bis 16,
**dadurch gekennzeichnet, dass**
die Formkörper keramisch gebrannt werden im Temperaturbereich zwischen 1200 °C und 1800 °C, insbesondere zwischen 1400 °C und 1700 °C.

18. Verwendung eines Erzeugnisses nach einem oder mehreren der Ansprüche 1 bis 8, insbesondere hergestellt nach einem oder mehreren der Ansprüche 9 bis 17 als Arbeitsfutter in einem großvolumigen Industrieofen, insbesondere in Zementofenanlagen, Kalkschacht- oder Kalkdrehrohrofen, Wärmeöfen, Öfen zur Energieerzeugung.

## Claims

1. A heavy-ceramic, refractory product consisting of at least one granular refractory material,
**characterised by**
- an open porosity of between 23 and 45 vol. %, in particular between 23 and 29 vol. %, and
- the following granulometric composition of the refractory material:
flour grain up to 0.1 mm: 20 to 61, in particular 25 to 55, % by weight medium grain 0.1 to 0.5 mm: 30 to 55, in particular 35 to 50, % by weight coarse grain over 0.5 mm, in particular up to 8 mm, preferably up to 6 mm: 9 to 25, in particular 10 to 25, % by weight.

2. A product according to Claim 1,
**characterised in that**
it is present in the form of mixer granules produced by granulation in a mixer, e.g. with granule diameters of between 0.1 and 5 mm, in particular between 0.5 and 4 mm, and/or in the form of agglomerated granules, e.g. with granule diameters of between 2 and 15 mm, in particular between 3 and 6 mm, or in the form of a moulded body, in particular a pressed moulded body, or is an unshaped monolithic lining of a fired or fireable large-volume industrial furnace.

3. A product according to Claim 1 or 2,
**characterised in that** it contains at least one binder which is known per se for refractory products, in particular in amounts of up to 9% by weight, preferably up to 6% by weight, and/or at least one additive agent known per se for refractory products, in particular in amounts of up to 10% by weight, preferably up to 6% by weight, and/or at least one additive substance known per se for refractory products, in particular in amounts of up to 10% by weight, preferably up to 6% by weight.

4. A product according to Claim 3,
**characterised in that**
it contains as binder water and/or tar and/or pitch and/or preferably at least one synthetic resin binder usually used for refractory products, e.g. a phenolformaldehyde or furan or novolac resin, and/or lignin sulphonate.

5. A product according to one or more of Claims 1 to 4,
**characterised in that**
it is ceramically fired or unfired or tempered and unfired.

6. A product according to one or more of Claims 1 to 5 in the form of an unfired, green, pressed moulded body and
**characterised by**
apparent densities of between 1.80 and 2.80, in particular between 2.00 and 2.70 g/cm³, and also compressive strengths of between 1.5 and 7, in particular between 2 and 4 MPa, and e.g. a residual moisture content of between 0.1 and 0.6, in particular between 0.2 and 0.5% by weight.

7. A product according to one or more of Claims 1 to 6,
**characterised in that**
it is ceramically fired and has a cold compressive strength of between 30 and 100, in particular between 45 and 80 MPa.

8. A product according to one or more of Claims 1 to 7,
**characterised in that**
the material is at least one material from the following group: magnesium oxide, doloma, magnesium aluminate spinel, hercynite, forsterite, pleonaste, chromium ore, zirconia, calcium aluminate, calcium hexaaluminate, alumina raw material and/or alumosilicate raw material, SiC, bonding clay, in particular from the following group:
magnesium oxide, doloma, chamotte, andalusite, forsterite, bauxite, very particularly from the following group
magnesium oxide with magnesium aluminate spinel
magnesium oxide with hercynite
magnesium oxide with forsterite
magnesium oxide with pleonaste
magnesium oxide with chromium ore.

9. A method for producing a product according to one or more of Claims 1 to 8, **characterised in that**
at least one granular refractory material, having a granulometric composition according to Claim 1, is mixed with a binder known per se for refractory products in a mixer and a mixer granulate consisting of granules is formed therefrom by a granulation process.

10. A method according to Claim 9,
**characterised in that**
mixer granules with diameters of between 0.1 and 5, in particular between 0.5 and 4 mm, are produced.

11. A method according to Claim 9 or 10, **characterised in that**
an agglomerated granulate consisting of granules with diameters between 2 and 15, in particular between 3 and 6 mm, is produced from the granules of the mixer granulate or directly from the at least one refractory material without prior mixer granulation by pelletising.

12. A method according to one or more of Claims 9 to 11,
**characterised in that**
at least one binder according to Claim 4 is used.

13. A method according to one or more of Claims 9 to 12,
**characterised in that**
before or during the granulation
at least one additive agent which is known per se for refractory products, in particular in an amount of up to 10% by weight, preferably up to 6% by weight, and/or at least one additive substance known per se for refractory products, in particular in an amount of up to 10, preferably up to 6, % by weight, is added.

14. A method according to one or more of Claims 9 to 13,
**characterised in that**
moulded bodies which have apparent densities of between 1.80 and 2.80, in particular between 2.00 and 2.70 g/cm³, and compressive strengths of between 1.5 and 7, in particular between 2 and 4 MPa, are compression-moulded at moulding pressures of between 10 and 60, in particular between 20 and 40 MPa, in a press.

15. A method according to Claim 14,
**characterised in that**
the moulded bodies are dried, in particular tempered, at between 60 and 200°C, in particular between 90 and 140°C, to a moisture content of < 0.6% by weight, in particular between 0.2 and 0.5% by weight.

16. A method according to one or more of Claims 9 to 15,
**characterised in that**
at least one refractory material from the following group is used:
magnesium oxide, doloma, magnesium aluminate spinel, hercynite, forsterite, pleonaste, chromium ore, zirconia, calcium aluminate, calcium hexaaluminate, alumina raw material and/or alumosilicate raw material, SiC, bonding clay, in particular from the following group: magnesium oxide, doloma, chamotte, andalusite, forsterite, bauxite, very particularly from the group:
magnesium oxide with magnesium aluminate spinel
magnesium oxide with hercynite
magnesium oxide with forsterite
magnesium oxide with pleonaste
magnesium oxide with chromium ore.

17. A method according to one or more of Claims 14 to 16,
**characterised in that**
the moulded bodies are ceramically fired in a temperature range of between 1200°C and 1800°C, in particular between 1400°C and 1700°C.

18. Use of a product according to one or more of Claims 1 to 8, in particular produced according to one or more of Claims 9 to 17, as a working lining in a large-volume industrial furnace, in particular in cement kiln systems, shaft lime kilns or rotary lime kilns, heating furnaces, furnaces for generating energy.

## Revendications

1. Produit de céramique grossière réfractaire à partir d'au moins un matériau réfractaire granulaire,
**caractérisé par**
- une porosité ouverte comprise entre 23 et 45 % en volume, en particulier entre 23 et 29 % en volume, et
- une structure granulaire suivante du matériau réfractaire :
grains broyés jusqu'à 0,1 mm : 20 à 61, en particulier 25 à 55 % en poids,
grains moyens de 0,1 à 0,5 mm : 30 à 55 mm, en particulier 35 à 50 % en poids,
grains grossiers de plus de 0,5 mm, en particulier jusqu'à 8 mm, de préférence jusqu'à 6 mm : 9 à 25, en particulier 10 à 25 % en poids.

2. Produit selon la revendication 1,
**caractérisé en ce que**
il se présente sous la forme de granulés mélangés produits par granulation dans un mélangeur, par exemple avec des diamètres de granulés entre 0,1 et 5 mm, en particulier entre 0,5 et 4 mm et/ou sous la forme de granulés de construction, par exemple avec des diamètres de granulés entre 2 et 15 mm, en particulier entre 3 et 6 mm, ou sous la forme d'un corps moulé, en particulier d'un corps moulé compressé, ou d'un revêtement monolithique non moulé d'un four industriel à combustion ou pouvant être à combustion.

3. Produit selon la revendication 1 ou 2,
**caractérisé en ce qu'**il contient au moins un liant connu en lui-même pour produits réfractaires, en particulier en quantités jusqu'à 9 % en poids, de préférence jusqu'à 6 % en poids, et/ou au moins un adjuvant connu en lui-même pour produits réfractaires, en particulier en quantités jusqu'à 10 % en poids, de préférence jusqu'à 6 % en poids, et/ou au moins un additif connu en lui-même pour produits réfractaires, en particulier en quantités jusqu'à 10 % en poids, de préférence jusqu'à 6 % en poids.

4. Produit selon la revendication 3,
**caractérisé en ce que**
il contient comme liant, de l'eau et/ou du goudron et/ou du brai et/ou de préférence au moins un liant de résine synthétique utilisé habituellement pour les produits réfractaires, par exemple une résine de phénoformaldéhyde ou de furane ou novolaque et/ou du sulfonate de lignine.

5. Produit selon une ou plusieurs des revendications 1 à 4,
**caractérisé en ce que**
il est cuit ou non cuit sur le plan céramique ou recuit et non cuit.

6. Produit selon une ou plusieurs des revendications 1 à 5, sous la forme d'un corps moulé non cuit, cru, compressé et
**caractérisé par**
des densités apparentes comprises entre 1,80 et 2,80, en particulier entre 2,00 et 2,70 g/cm³, et des solidités à la pression entre comprises 1,5 et 7, en particulier entre 2 et 4 MPa, et par exemple une humidité résiduelle comprise entre 0,1 et 0,6, en particulier entre 0,2 et 0,5 % en poids.

7. Produit selon une ou plusieurs des revendications 1 à 6,
**caractérisé en ce que**
il est cuit sur le plan céramique et présente une solidité à la pression à froid comprise entre 30 et 100, en particulier entre 45 et 80 MPa.

8. Produit selon une ou plusieurs des revendications 1 à 7,
**caractérisé en ce que**
le matériau est au moins un matériau du groupe suivant : magnésie, dolomie, aluminate de magnésium-spinelle, hercynite, forstérite, pléonaste, minerai de chrome, zircone, aluminate de calcium, hexa-aluminate de calcium, matière première de silicate d'alumine et/ou d'alumosilicate, SiC, argile de liaison, en particulier du groupe suivant magnésie, dolomie, chamotte, andalousite, forstérite, bauxite, tout particulièrement du groupe suivant
magnésie avec aluminate de magnésium-spinelle
magnésie avec hercynite
magnésie avec forstérite
magnésie avec pléonaste
magnésie avec minerai de chrome.

9. Procédé de fabrication d'un produit selon une ou plusieurs des revendications 1 à 8,
**caractérisé en ce que**
au moins un matériau réfractaire granulé, présentant une structure granulaire selon la revendication 1, est mélangé avec un liant connu en lui-même pour produits réfractaires, et ainsi, par un processus de granulation, un granulat mélangé à partir de granulés est formé.

10. Procédé selon la revendication 9,
**caractérisé en ce que**
des granulés mélangés avec des diamètres compris entre 0,1 et 5, en particulier entre 0,5 et 4 mm sont produits.

11. Procédé selon la revendication 9 ou 10,
**caractérisé en ce que**
à partir des granulés du granulat mélangé ou directement à partir d'au moins un matériau réfractaire, un granulat de construction à partir de granulés avec des diamètres compris entre 2 et 15, en particulier entre 3 et 6 mm, est produit sans granulation au mélangeur par une granulation de construction.

12. Procédé selon une ou plusieurs des revendications 9 à 11,
**caractérisé en ce que**
au moins un liant selon la revendication 4 est utilisé.

13. Procédé selon une ou plusieurs des revendications 9 à 12,
**caractérisé en ce que**
avant ou pendant la granulation,
au moins un adjuvant connu en lui-même pour produits réfractaires est ajouté, en particulier en une quantité jusqu'à 10, de préférence jusqu'à 6 % en poids, et/ou au moins un additif connu en lui-même pour produits réfractaires est ajouté, en particulier en une quantité jusqu'à 10, de préférence jusqu'à 6 % en poids.

14. Procédé selon une ou plusieurs des revendications 9 à 13,
**caractérisé en ce que**
des corps moulés sont moulés à des pressions comprises entre 10 et 60, en particulier entre 20 et 40 MPa dans une presse, qui présentent des densités apparentes comprises entre 1,80 et 2,80, en particulier entre 2,00 et 2,70 g/cm³, et des solidités à la pression comprises entre 1,5 et 7, en particulier entre 2 et 4 MPa.

15. Procédé selon la revendication 14,
**caractérisé en ce que**
les corps moulés sont séchés, en particulier recuits, entre 60 et 200 °C, en particulier entre 90 et 140 °C, jusqu'à une humidité < 0,6 % en poids, en particulier comprise entre 0,2 et 0,5 % en poids.

16. Procédé selon une ou plusieurs des revendications 9 à 15,
**caractérisé en ce que**
au moins un matériau réfractaire du groupe suivant est utilisé :
magnésie, dolomie, aluminate de magnésium-spinelle, hercynite, forstérite, pléonaste, minerai de chrome, zircone, aluminate de calcium, hexa-aluminate de calcium, matière première de silicate d'alumine et/ou d'alumosilicate, SiC, argile de liaison, en particulier du groupe suivant magnésie, dolomie, chamotte, andalousite, forstérite, bauxite, tout particulièrement du groupe
magnésie avec aluminate de magnésium-spinelle
magnésie avec hercynite
magnésie avec forstérite
magnésie avec pléonaste
magnésie avec minerai de chrome.

17. Procédé selon une ou plusieurs des revendications 14 à 16,
**caractérisé en ce que**
le corps moulé est cuit sur le plan céramique dans la plage de température comprise entre 1200 °C et 1800 °C, en particulier entre 1400 °C et 1700 °C.

18. Utilisation d'un produit selon une ou plusieurs des revendications 1 à 8, en particulier fabriqué selon une ou plusieurs des revendications 9 à 17, comme revêtement de travail dans un four industriel à grand volume, en particulier dans des installations de four à ciment, de four à chaux annulaire ou de four à chaud rotatif, de fours thermiques, de fours pour génération d'énergie.
